# FASCICULE DE BREVET EUROPEEN

(11) **EP 1 399 671 B1**
(45) Date de publication et mention de la délivrance du brevet: **19.07.2006**
(21) Numéro de dépôt: 02780918.5
(22) Date de dépôt: 28.06.2002
(51) Int. Cl.: F02N 15/02, F02N 15/06, F16B 21/18, F16B 43/00, F16D 7/02

(54) **DEMARREUR DE VEHICULE AUTOMOBILE A LANCEUR PERFECTIONNE**
ANLASSER FÜR KRAFTFAHRZEUG MIT VERBESSERTEM RITZEL
MOTOR VEHICLE STARTER WITH IMPROVED STARTER DRIVE ASSEMBLY

(30) Priorité: 29.06.2001 FR 0108610; 29.06.2001 FR 0108612; 29.06.2001 FR 0108607; 21.06.2002 FR 0202160
(43) Date de publication de la demande: 24.03.2004
(73) Titulaire: VALEO EQUIPEMENTS ELECTRIQUES MOTEUR, 94000 Créteil (FR)
(72) Inventeur: VILOU, Gérard, F-69160 Tassin La Demi Lune (FR); BOCQUET, Chantal, F- 69006 Lyon (FR); FAUCON, Guy, F-69003 Lyon (FR); MORNIEUX, Christian, F-69600 Oullins (FR); VADIN-MICHAUD, Gilles, F-69100 Villeurbanne (FR)
(74) Mandataire: Gamonal, Didier
(86) Numéro de dépôt international: PCT/FR2002/002244
(87) Numéro de publication internationale: WO 2003/002871

(56) Documents cités:
- DE-C- 242 194
- FR-A- 2 772 433
- US-A- 4 193 434

## Description

### DOMAINE TECHNIQUE DE L'INVENTION

La présente invention est relative aux démarreurs de véhicules automobiles, et plus précisément aux lanceurs que comportent de tels démarreurs.

### ETAT DE LA TECHNIQUE

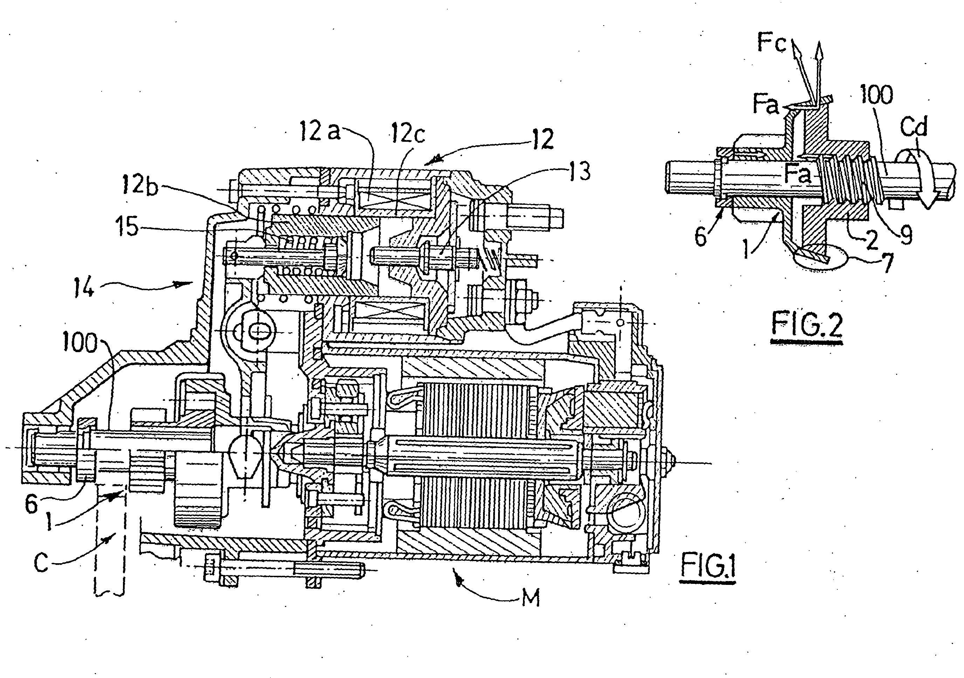

Tel qu'illustré sur la figure 1, un démarreur de véhicule automobile comporte classiquement un contacteur 12 ainsi qu'un moteur électrique M adapté à entraîner directement ou indirectement, ici via un réducteur, un arbre de sortie 100, qui porte un lanceur doté d'un pignon 1. Le pignon 1 est destiné à coopérer avec l'engrenage de la couronne de démarrage C du moteur à combustion interne du véhicule automobile. Il est coulissant sur l'arbre de sortie entre une position de repos où il est désengagé par rapport à ladite couronne de démarrage et une position avancée où il engrène avec celle-ci en étant en appui sur une butée de travail 6.

Le contacteur 12 s'étend parallèlement au moteur électrique M au-dessus de celui-ci et comporte un bobinage 12a et un noyau plongeur 12b.

Il assure la commande de l'alimentation du moteur électrique M par déplacement d'un contact mobile 13 entre une position d'ouverture et une position de fermeture, ledit contact 13 étant poussé par ledit noyau plongeur 12b mobile axialement par rapport au moteur électrique M lorsque le bobinage 12a est activé.

Le contacteur 12 commande également le déplacement du pignon 1. Son noyau plongeur 12b est pour cela relié au pignon 1 par des moyens mécaniques référencés par 14 dans leur ensemble.

Ces moyens mécaniques comportent un levier de commande en forme de fourchette attelée à son extrémité supérieure au noyau plongeur 12b et à son extrémité inférieure à un entraîneur appartenant également au lanceur. L'entraîneur est doté d'une douille d'entraînement comportant une gorge de réception de la fourchette. La fourchette accompagne le lanceur vers la position avancée de travail du pignon.

Le lanceur comporte également une roue libre intercalée axialement entre la douille d'entraînement et le pignon 1. La douille d'entraînement est dotée intérieurement de cannelures hélicoïdales en prise de manière complémentaire avec des dentures hélicoïdales externes portées localement par l'arbre de sortie entraîné par le moteur électrique M lorsque celui-ci est alimenté électriquement.

La fourchette est montée de manière pivotante entre ses deux extrémités sur un carter contenant intérieurement les moyens mécaniques 14 et portant le moteur M et le contacteur 12. Le lanceur avec son pignon 1 est animé d'un mouvement hélicoïdal lorsqu'il est déplacé par la fourchette pour venir en prise avec la couronne de démarrage.

Ceci est réalisé en alimentant le bobinage 12a suite à un actionnement de la clef de contact ce qui permet de mettre en mouvement le noyau plongeur 12b attiré alors en direction d'un noyau fixe monté à l'extrémité d'un support du bobinage 12a. Ce support a une section en forme de U pour loger le bobinage 12a et comporte donc un fond constituant un coussinet 12C. Le noyau 12b est donc destiné à se déplacer entre une position de repos et une position de contactage dans laquelle il est en appui sur le noyau fixe ; cette position de fermeture du circuit magnétique ayant lieu après fermeture du contact mobile 13 et donc du circuit électrique.

Les moyens mécaniques comportent également un ressort de rappel monté autour du noyau 12b pour rappeler celui-ci en position de repos, un ressort de coupure associé au contact mobile 13 pour rappeler celui-ci en position d'ouverture et un ressort 15, dit ressort dents contre dents, logé à l'intérieur du noyau 12b et en prise avec une première tige reliée par un axe à l'extrémité supérieure de la fourchette pour attelage de celle-ci au noyau 12b. Ce ressort 15 a une plus forte raideur que le ressort de rappel.

La fourchette est donc intercalée à son extrémité supérieure entre le noyau 12b et l'axe. La première tige est montée à l'intérieur d'un trou borgne du noyau 12b. Le noyau 12b est destinée après une course déterminée à venir en prise avec une deuxième tige solidaire du contact mobile 13 et montée coulissante à l'intérieur du noyau fixe. En position de fermeture le contact 13 coopère avec un contact fixe, sous forme de plots reliés respectivement à la borne positive de la batterie et au moteur électrique M, permettant ainsi l'alimentation du moteur électrique.

Les plots sont solidaires du capot de fermeture du contacteur en matière isolante.

Tous ces éléments sont représentés à la figure 1 et n'ont pas été tous référencés par simplicité.

Le pignon 1 peut donc venir en prise avec la couronne C, c'est-à-dire venir en position d'engrènement avec la couronne C, avant que le contact mobile ne soit fermé.

Le plus souvent le pignon 1 vient axialement en contact de butée avec des dents de la couronne C avant de pénétrer dans celle-ci.

Ainsi les moyens mécaniques 14 comportent notamment le ressort 15, qui est mécaniquement interposé entre le noyau plongeur 12b et le pignon 1 et qui permet au noyau plongeur 12b de poursuivre sa course pour assurer, avant son contact avec le noyau fixe, la mise en position de fermeture du contact mobile, même si le pignon 1 est bloqué en butée contre les dents de la couronne du moteur thermique dans une position où il n'engrène pas avec cette couronne.

Ainsi qu'on le sait la roue libre, interposée entre le pignon 1 et la douille du lanceur, a pour fonction principale d'éviter que, lorsque le moteur à combustion interne du véhicule démarre, le pignon 1 entraîne le moteur électrique à une vitesse trop importante susceptible de détériorer ce dernier.

Les galets que comporte la roue libre sont soumis chacun à l'action d'un ressort à action circonférentielle en sorte que cela permet d'amortir les vibrations brusques du couple qui est transmis entre la douille d'entraînement et le pignon 1.

Dans le but de réduire l'encombrement, le poids et le coût de la roue libre par rapport à son usage on a proposé dans le document FR A 2 772 433 , conforme au préambule de la revendication 1, de faire intervenir un dispositif d'attelage à embrayage du type conique entre le pignon et l'entraîneur pour atteler le pignon au lanceur.

En pratique le pignon et l'entraîneur portent chacun à solidarisation respectivement une première surface de frottement tronconique et une deuxième surface de frottement tronconique. Ces surfaces de frottement coaxiales ont une forme complémentaire et sont sollicitées au contact l'une avec l'autre, avec un effort de valeur prédéterminé, par l'intermédiaire de moyens élastiques à action axiale prenant appui dans une première forme de réalisation sur une première butée solidaire de l'extrémité libre d'une jupe appartenant à une pièce d'attelage de forme annulaire pour action sur une deuxième butée solidaire de l'entraîneur de manière que l'entraîneur puisse glisser en rotation par rapport au pignon du lanceur lorsque la vitesse de rotation du pignon est supérieure à celle de l'entraîneur. En variante dans une deuxième forme de réalisation les moyens élastiques prennent appui sur une première butée solidaire de la pièce d'attelage pour action sur une deuxième butée solidaire du pignon.

Le diamètre moyen des surfaces de frottement est sensiblement égal au diamètre du cercle primitif des dents du pignon du lanceur. En pratique la pièce d'attelage consiste en un capot d'attelage présentant à sa périphérie externe une jupe annulaire dirigée axialement vers l'entraîneur en étant de forme cylindrique et d'orientation axiale. Ce capot présente un fond, qui dans la première forme de réalisation est en appui axial sur une surépaisseur prolongement axial du pignon. Dans la deuxième forme de réalisation les moyens élastiques à action axiale sont interposés entre le fond de la pièce d'attelage et un prolongement axial du pignon.

Les moyens élastiques consistent dans une forme de réalisation en un ressort à boudin et dans une autre forme de réalisation en une rondelle ondulée. En variante, comme décrit dans le document DE-C-242194 les moyens élastiques comportent des languettes dirigées axialement en sens inverse.

Ces dispositions donnent satisfaction, néanmoins il peut être souhaitable, de manière simple et économique, d'augmenter encore l'efficacité et la fiabilité de fonctionnement du dispositif d'attelage à embrayage conique.

La présente invention a pour objet de répondre à ce souhait.

### OBJET DE L'INVENTION

Suivant l'invention ce problème est résolu par la partie caractérisante de la revendication 1.

Grâce à l'invention on maîtrise mieux la force exercée par les moyens élastiques en sorte que l'efficacité et la fiabilité du dispositif d'attelage sont augmentées car les languettes élastiques génèrent une force plus constante en fonction d'une course d'usure que celle générée par une rondelle élastique du type ondulée.

En effet avec une rondelle ondulée la force axiale varie rapidement en fonction de la course d'usure en sorte que la force générée par ce type de rondelle est importante au début de la durée de vie du lanceur puis diminue par la suite. Plus précisément les moyens élastiques sont montés sous précontrainte de manière à créer au niveau des surfaces de frottement tronconiques de l'embrayage conique un couple de frottement supérieur au couple de vissage de l'entraîneur sur les cannelures de l'arbre de sortie du démarreur en sorte que l'on recherchera à avoir une force minimale en fin d'usure du démarreur qui assure cette condition. Avec une rondelle ondulée la force doit donc être importante au début de la vie du lanceur pour réaliser cette condition en fin d'usure. Cette force importante est gênante lorsque le moteur du véhicule automobile démarre et entraîne le moteur électrique du démarreur car un couple résiduel important est transmis du pignon vers ce moteur électrique. Une valeur élevée de ce couple résiduel présente un risque de détérioration du moteur électrique du démarreur par survitesse.

Avec ce type de rondelle ondulée on prend un risque du point de vue de la fiabilité du démarreur ainsi que du point de vue du bruit généré par la survitesse du moteur électrique du démarreur.

Grâce au languettes selon l'invention on ne retrouve pas ces inconvénients car les variations de forces exercées par ces languettes sur l'embrayage conique au début et en fin de vie du démarreur sont moins importantes.

La solution selon l'invention permet d'augmenter la durée de vie et la fiabilité du démarreur, tout en rendant celui-ci moins bruyant en régime de survitesse.

Avec un ressort hélicoïdal on peut obtenir des variations de force moins importantes à condition d'augmenter la longueur axiale de celui-ci ce qui conduit à augmenter la longueur axiale du lanceur.

Grâce à l'invention on obtient une solution compacte axialement.

Les languettes élastiques sont d'un encombrement axial réduit et sont cambrées axialement dans une forme de réalisation en sorte qu'après montage les forces de flexion amènent les surfaces de frottement en contact l'une avec l'autre.

En jouant sur la longueur circonférentielle et sur l'épaisseur des languettes, on contrôle la charge exercée par celles-ci. Les languettes appartiennent à une zone élastique des moyens élastiques à action axiale.

Cette zone élastique se raccorde à une zone d'arrêt en translation du lanceur ou du pignon, attelée à la jupe de la pièce d'attelage. Cette zone d'arrêt est en contact avec la première butée et est décalée axialement par rapport à l'extrémité libre des languettes.

Dans une forme de réalisation elle est en forme de capot annulaire fixé par exemple par sertissage ou clipsage sur la jupe présentant à cet effet une protubérance ou une gorge. En variante la zone d'arrêt se réduit à une simple rondelle.

Cette rondelle est, dans une forme de réalisation, ouverte par exemple radialement en sorte qu'elle se comporte comme un circlips se montant dans une gorge de la jupe.

Le flanc de la gorge le plus éloigné de la deuxième butée constitue la première butée.

Cette solution est simple et économique car, d'une part, la gorge est de réalisation aisée par exemple par tournage et, d'autre part, le nombre de pièces à assembler en final est minimum ; les moyens élastiques verrouillant en final l'assemblage du pignon avec l'entraîneur constituant chacun un sous-ensemble.

En variante la première butée appartient à une pièce saillante radialement vers l'intérieur et rapportée par exemple par soudage, collage ou sertissage sur l'extrémité libre de la jupe.

En variante la rondelle est fermée et un montage du type baïonnette intervient pour son montage sur la jupe.

Par exemple la rondelle présente à sa périphérie externe des pattes radiales saillantes s'engageant dans des passages débouchant d'une part à l'extrémité libre de la jupe et d'autre part dans la gorge.

On engage les pattes dans le passage, puis ensuite on effectue une rotation des pattes dans la gorge.

En variante lorsque la première butée s'étend en saillie radiale vers l'intérieur, on fractionne celle-ci en secteurs annulaires pour réaliser des passages, la rondelle présentant alors à sa périphérie externe des échancrures pour passage des secteurs annulaires et autoriser une rotation de la rondelle pour amener la périphérie externe de celle-ci en forme de pattes en contact avec la première butée ; les secteurs comportant avantageusement des creusures pour recevoir les pattes et bloquer en rotation la rondelle.

Bien entendu, en variante, on met d'abord en place les moyens élastiques puis on rapporte ensuite la première butée.

Dans une forme de réalisation les languettes sont découpées circonférentiellement dans la rondelle.

En variante la zone élastique est entourée par la rondelle et se raccorde à la périphérie interne de celle-ci par des zones d'enracinement.

Les languettes sont alors réalisées sous la forme de bras en forme de secteur annulaire ce qui permet d'obtenir une longueur circonférentielle importante tout en ayant une caractéristique élastique avantageuse.

Plus précisément, suivant la longueur circonférentielle du bras et sa section, on obtient la force souhaitée en fonction de la déflexion axiale du bras.

Dans une forme de réalisation les bras d'orientation circonférentielle s'étendent circonférentiellement en porte-à-faux de part et d'autre d'une zone d'enracinement.

La périphérie interne de la rondelle appartenant à la zone d'arrêt à un plus grand diamètre, que le diamètre de la périphérie externe des bras.

La zone élastique est donc implantée en-dessous de la périphérie interne de la zone d'arrêt.

Les moyens élastiques selon l'invention peuvent être par exemple intégrés au capot de la figure 5 du document FR A 2 772 433 précité. Néanmoins il peut être souhaitable de rendre plus robuste le lanceur et de simplifier encore celui-ci, tout en augmentant encore la fiabilité et les performances du lanceur.

Ainsi de préférence les moyens élastiques sont portés par la jupe de la pièce d'attelage, qui porte intérieurement l'une des surfaces de frottement tronconique. Cette jupe est, via le fond de la pièce d'attelage, solidaire de l'élément pignon-entraîneur qui est associé à la surface de frottement portée intérieurement par la jupe, en sorte que le diamètre moyen de contact de la première surface de frottement tronconique avec la deuxième surface de frottement tronconique est supérieur au diamètre du cercle primitif des dents du pignon.

Avantageusement ledit diamètre moyen est supérieur au diamètre du cercle de tête des dents du pignon.

Ce diamètre moyen est, en cas de survitesse du pignon par rapport à l'entraîneur, un diamètre moyen de friction. L'embrayage conique selon l'invention est de manière fiable bloqué lorsque le moteur électrique du démarreur entraîne le moteur à combustion interne du véhicule via la couronne de démarrage et est adapté à se débloquer lorsque le moteur à combustion interne entraîne le pignon à une vitesse de rotation supérieure (survitesse) à celle de l'entraîneur.

Grâce à ces dispositions l'efficacité et la fiabilité du lanceur sont augmentées car le diamètre moyen de la première ou de la deuxième surface de frottement tronconique est plus grand du fait que cette surface appartient à la jupe de la pièce d'attelage implantée sur un plus grand diamètre que le diamètre du cercle de tête du pignon. On augmente ainsi le diamètre moyen de la première surface de frottement tronconique par rapport au diamètre des cannelures de l'arbre de sortie du démarreur portant l'entraîneur. Bien entendu le diamètre moyen de la deuxième surface de frottement tronconique est également augmenté du fait que les deux surfaces de frottement tronconiques sont coaxiales et complémentaires, la deuxième surface pénétrant à l'intérieur de la première surface. Ces deux surfaces tronconiques ont le même angle de cône.

Ainsi grâce à l'invention pour un encombrement diamétral donné du lanceur la première surface de frottement et la deuxième surface de frottement tronconiques auront donc chacune le plus grand diamètre moyen de frottement possible.

On appréciera également que l'on supprime les viroles des figures 3 et 5 du document FR A 2 772 433 en sorte que le lanceur est simplifié et est plus robuste. Le pignon est également simplifié

D'une manière générale l'intégration de la pièce d'attelage au pignon ou à l'entraîneur permet de réduire le nombre de pièces à assembler en final, les moyens élastiques verrouillant le tout.
Avantageusement l'une des surfaces de frottement tronconique est plus longue axialement que l'autre surface de frottement tronconique et entoure complètement celle-ci ce qui permet de réduire encore l'encombrement axial du lanceur.

Dans tous les cas la pièce d'attelage protège, par l'intermédiaire de sa jupe et également de son fond solidaire dans une forme de réalisation, de manière étanche du pignon, les surfaces de frottement tronconiques et évite que celles-ci soit souillées par exemple par de l'huile et de l'eau.

Le fonctionnement du lanceur est donc fiable et d'une grande durée de vie.

Le fait que la pièce d'attelage soit par exemple solidaire du pignon permet de réduire l'encombrement axial du lanceur du fait notamment que le fond de la pièce d'attelage ne s'étend pas en surépaisseur et simplifie également le montage du lanceur.

Le lanceur et la pièce d'attelage ou le pignon et la pièce d'attelage constituent un sous-ensemble manipulable, transportable et imperdable. Ce sous-ensemble est d'assemblage aisé avec le second sous-ensemble.

En outre il est possible de réaliser chacun de ces sous-ensembles de manière monobloc ou en plusieurs pièces de préférence en une matière différente adaptée à la fonction à réaliser.

On appréciera également que le poids et le coût du lanceur sont réduits.

Suivant une caractéristique la deuxième surface de butée est solidaire d'un épaulement transversal délimitant axialement la deuxième ou la première surface de frottement tronconique.

Cette disposition permet de simplifier encore l'entraîneur ou le pignon et d'augmenter la tenue mécanique de ceux-ci.

Cela permet également de réaliser l'entraîneur par moulage à base de matière plastique, ce qui permet et donc d'alléger celui-ci.

En outre les moyens élastiques à action axiale exercent une action respectivement sur l'entraîneur et le pignon selon un diamètre moyen voisin selon les cas du diamètre moyen de la deuxième ou de la première surface de frottement tronconique. Dans une forme de réalisation le diamètre moyen d'action des moyens élastiques à action axiale est globalement égal au plus petit diamètre de la deuxième surface de frottement tronconique.

L'action des moyens élastiques à action axiale sur l'entraîneur ou le pignon a donc lieu dans une zone épaisse de ceux-ci ce qui est favorable notamment pour leur implantation.

Avantageusement la jupe est de forme tronconique pour réduire encore l'encombrement et le poids du lanceur.

Dans une forme de réalisation la première butée est portée par un prolongement de la jupe de forme tubulaire constituant l'extrémité libre de la pièce d'attelage.

Le prolongement tubulaire a une longueur axiale qui dépend des applications et notamment de l'épaisseur axiale des moyens élastiques à action axiale et permet de ne pas augmenter l'encombrement radial du lanceur tout en facilitant le montage du lanceur.

Plus précisément ce prolongement tubulaire sert de manière simple à la fixation d'un système de maintien et de fermeture du lanceur complet, ledit système comportant la première butée et les moyens élastiques à action axiale.

Dans un mode de réalisation le diamètre moyen de friction et/ou de contact entre les surfaces de frottement tronconique est égal ou supérieur à 75% du diamètre du prolongement tubulaire de la jupe.

D'autres caractéristiques, buts et avantages de l'invention apparaîtront à la lecture de la description détaillée qui va suivre, faite en référence aux figures annexées, sur lesquelles :

### DESCRIPTION SOMMAIRE DES DESSINS

- la figure 1 représente un démarreur de véhicule automobile conforme à l'état de la technique ;
- la figure 2 représente schématiquement les forces agissant au sein d'un lanceur selon l'invention lorsque le démarreur entraîne le moteur à combustion interne du véhicule automobile;
- la figure 3 est une vue en coupe axiale du lanceur pour un premier mode de réalisation selon l'invention;
- la figure 4 est une vue de face de la rondelle élastique de la figure 3 ;
- la figure 5 est une vue analogue à la figure 3 pour un deuxième exemple de réalisation selon l'invention ;
- les figures 6 et 7 sont des vues analogues aux figures 3 et 4 pour un troisième exemple de réalisation selon l'invention ;
- la figure 8 est une vue avec arrachement partiel analogue aux figures 3 et 5 pour un quatrième exemple de réalisation selon l'invention
- les figures 9 et 10 sont respectivement une vue de face et de côté d'une variante de réalisation de la figure 7.

### DESCRIPTION DE MODES DE REALISATION PREFERENTIELS DE L'INVENTION

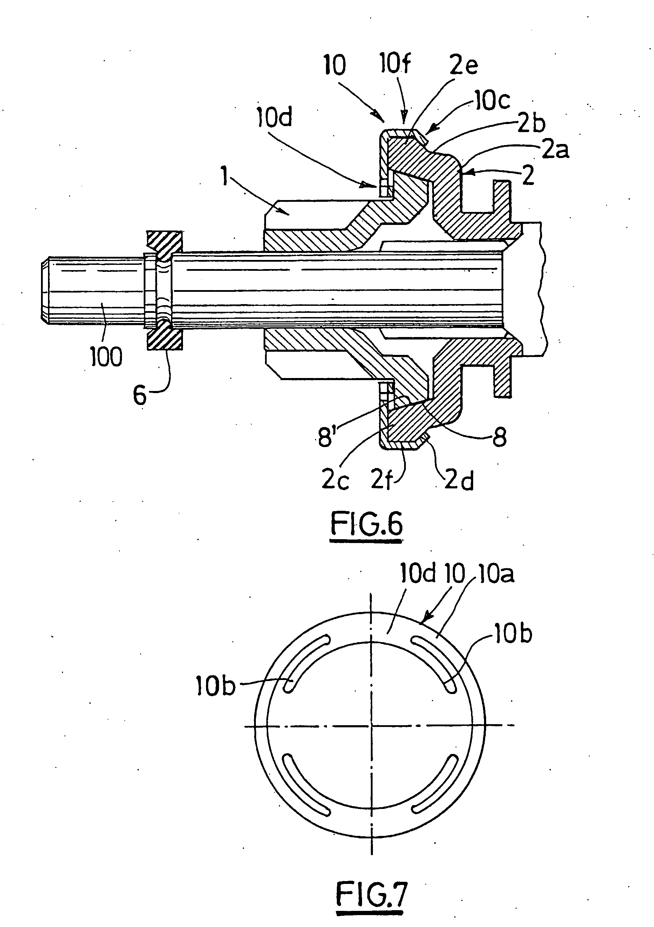

Dans les figures 2 à 8, pour notamment réduire le nombre de pièces du lanceur à assembler en final et augmenter encore l'efficacité et la fiabilité de fonctionnement du lanceur, on a, selon une caractéristique de l'invention, remplacé le lanceur de la figure 1 par un lanceur doté d'un pignon 1 portant une première surface de frottement tronconique 8 coopérant de manière complémentaire et coaxiale avec une deuxième surface de frottement tronconique 8' portée par l'entraîneur 2 pour formation d'un embrayage conique (référencé en 7 à la figure 2), dont le diamètre moyen de contact de la première surface de frottement tronconique 8 avec la deuxième surface de frottement tronconique 8' est supérieur au diamètre du cercle primitif des dents du pignon. Ici ledit diamètre moyen de contact est supérieur au diamètre du cercle de tête des dents du pignon et est, en cas de survitesse du pignon par rapport à l'entraîneur un diamètre moyen de friction. L'embrayage conique et une jupe d'attelage 1b, de forme annulaire, appartiennent de manière précitée à un dispositif d'attelage intervenant entre l'entraîneur 2 et le pignon 1 pour atteler le pignon à l'entraîneur. La jupe d'attelage 1b est solidaire du pignon (figure 2,3,8) ou de l'entraîneur (figures 5,6) ce qui permet de réduire le nombre de pièces à assembler en final et simplifie celles-ci. Les surfaces 8,8' ont le même angle de cône.
Suivant une caractéristique importante la jupe porte intérieurement l'une des surfaces de frottement tronconique 8,8'. Suivant une autre caractéristique importante la jupe porte à son extrémité libre des moyens élastiques à action axiale et ce en saillie axiale par rapport à l'autre surface 8,8' non portée par la jupe.
Plus précisément la première surface de frottement tronconique 8 dans les figures 2,3 et 8 est portée par la périphérie interne d'une jupe 1b d'une pièce d'attelage de forme annulaire et creuse, dont le fond annulaire 1a est solidaire du pignon 1 du lanceur, éventuellement en plusieurs pièces avantageusement de matière différente adaptées à leur fonction propre. Ce fond est troué centralement pour passage de l'arbre de sortie 100 comme visible à la figure 2. La pièce d'attelage est réalisée par exemple de manière économique par emboutissage d'une tôle. En variante la pièce d'attelage est plus massive. La jupe 1 b de la pièce d'attelage est dirigée axialement vers l'entraîneur 2.

L'entraîneur 2 présente à sa périphérie interne, comme à la figure 1, des cannelures hélicoïdales en prise avec des cannelures hélicoïdales portées par la périphérie externe de l'arbre 100. Des cannelures hélicoïdales 9 interviennent donc de manière complémentaire entre l'arbre 100 et l'entraîneur 2.

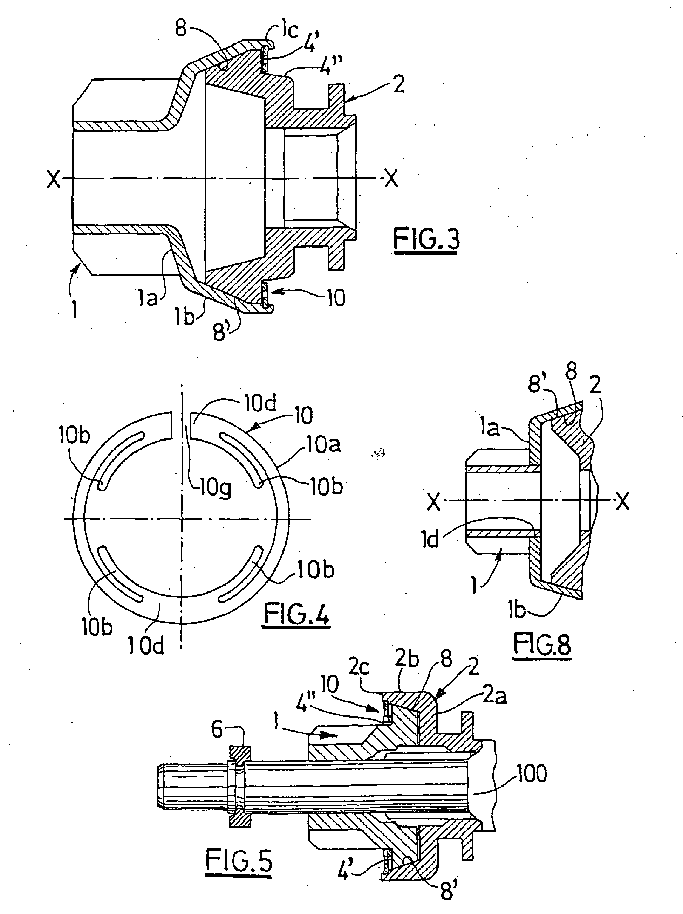

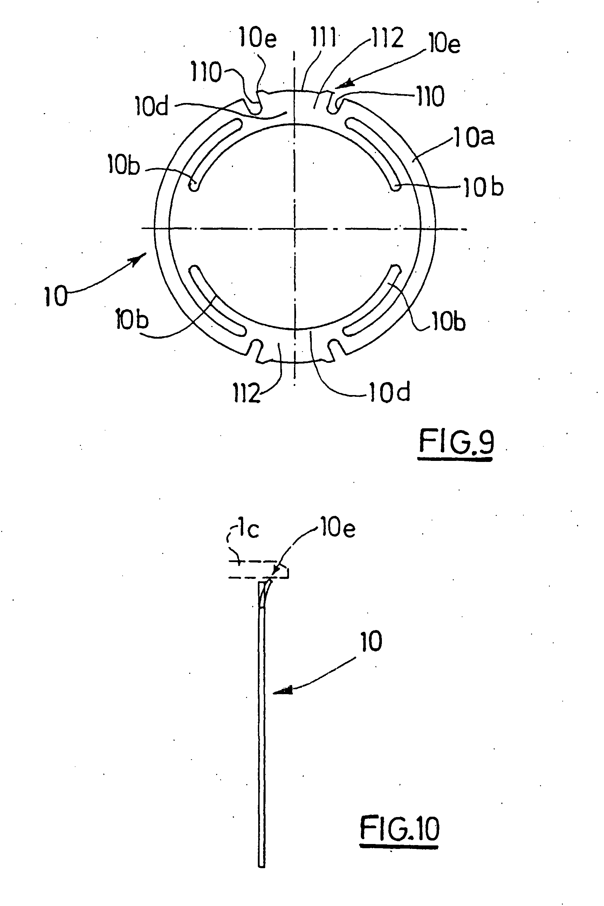

La jupe se raccorde à l'une de ses extrémités axiales, dite première extrémité axiale, à la périphérie externe du fond globalement d'orientation transversale de la pièce d'attelage. A la figure 3 le fond 1a est de forme tronconique, tandis que dans la figure 8 il est transversal.

Dans une première forme de réalisation la jupe est massive, comme à la figure 5, en étant de forme annulaire d'orientation axiale à sa périphérie externe. Extérieurement la jupe est donc cylindrique et intérieurement de forme tronconique pour porter la première surface de frottement tronconique.

Dans une autre forme de réalisation, comme représenté dans ces figures, pour encore réduction de la masse du lanceur, la jupe est de forme tronconique de préférence d'épaisseur constante en sorte que la pièce d'attelage est globalement en forme de cloche. Cette pièce est par exemple en tôle emboutie.

Suivant une caractéristique la jupe est prolongée axialement au-delà de l'extrémité axiale de plus grand diamètre, dit diamètre externe, de la première surface de frottement tronconique 8' par une zone d'extrémité annulaire d'orientation axiale (1c à la figure 3). La zone annulaire 1c forme donc un prolongement tubulaire de la première surface 8 de la jupe intérieurement de forme évasée en direction de l'entraîneur et s'étend en saillie axiale par rapport à la deuxième surface 8'.

Cette zone 1c, de forme cylindrique, délimite la deuxième extrémité axiale de la jupe, c'est à dire son extrémité libre, et porte une première butée s'étendant radialement vers l'intérieur c'est à dire transversalement par rapport à l'axe de symétrie axiale X-X du lanceur. La première butée transversale est, pour réduction du nombre de pièces à assembler en final, formée ici à la faveur d'une gorge réalisée à la périphérie interne de cette zone 1c constituant l'extrémité libre de la jupe et de la pièce d'attelage. C'est le flanc transversal de cette gorge le plus éloigné de l'entraîneur 2, qui constitue la première butée.

Des moyens élastiques à action axiale 10, avantageusement en acier à ressort, sont portés par la jupe 1C et prennent appui sur la première butée pour action sur une deuxième butée radiale 4', c'est à dire transversale, solidaire de l'entraîneur 2 et serrage de la deuxième surface de frottement tronconique 8' solidaire de l'entraîneur en contact de manière complémentaire et coaxiale avec la première surface de frottement tronconique solidaire de la jupe et donc du pignon du lanceur. La deuxième surface tronconique 8' est de forme convexe, tandis que la première surface tronconique 8 est de forme concave. Autrement dit l'entraîneur 2 porte un cône mâle pénétrant au moins en partie dans un cône femelle porté par le pignon. Comme représenté à la figure 3, la première surface 8 constituant la surface de frottement radialement externe portée par la jupe 1b entoure complètement la deuxième surface 8' de frottement radialement interne portée par l'entraîneur 2. La figure 5 illustre un second mode de réalisation dans lequel c'est l'entraîneur 2 qui porte la jupe 2b, cette jupe 2b portant alors la surface de frottement 8' radialement externe. Ainsi selon un mode avantageux de l'invention, les moyens élastiques 10 sont portés par l'extrémité libre de la jupe qui porte la surface de frottement 8, 8' radialement externe. Ce mode de réalisation présente l'avantage de simplifier considérablement la conception du lanceur conique décrit dans le document FR 2,772,443 dans lequel la jupe qui porte les moyens élastiques porte la surface radialement interne de friction ce qui nécessite la réalisation d'une virole.

Ces surfaces 8,8' ont un diamètre moyen supérieur au diamètre du cercle de tête du pignon 1,10 en sorte que le diamètre moyen de friction ou de contact des deux surfaces 8,8' est supérieur au diamètre du cercle de tête des dents du pignon. L'efficacité et la fiabilité de fonctionnement du lanceur sont donc accrues. L'encombrement axial est également réduit. En outre on rattrape les usures des surfaces ; la première surface 8 étant suivant une caractéristique plus longue axialement que la seconde surface 8' en sorte que l'entraîneur peut se rapprocher encore plus du pignon et que l'encombrement axial du lanceur est encore réduit. Le diamètre moyen de contact et de friction entre les deux surfaces de frottement 8,8' est donc égal au diamètre moyen de la deuxième surface 8' présentant à son extrémité axiale adjacente aux moyens élastique 10 un plus grand diamètre qu'a son autre extrémité axiale de plus petit diamètre. Le diamètre moyen est donc situé au milieu de la longueur axiale de la deuxième surface 8' ; la première surface 8 s'étendant axialement de part et d'autre de la deuxième surface 8'.

Les moyens élastiques 10 appartiennent également au dispositif d'attelage et plus précisément constituent avec la première butée un système de maintien ou de retenue et de fermeture du lanceur complet.

On fabrique donc d'abord un premier sous-ensemble comportant la le pignon et la pièce d'attelage dotée de la première surface 8 et un deuxième sous-ensemble constitué par l'entraîneur muni à sa périphérie externe de la deuxième surface 8', puis on rapproche l'entraîneur par rapport au premier sous-ensemble en enfilant la deuxième surface dans la première surface et enfin on met en place les moyens élastiques 10 pour verrouiller le tout.

Ces moyens élastiques 10 sont implantés à compression axiale, c'est à dire sous précontrainte, entre la première butée et la deuxième butée 4' portée ici, pour encore réduire l'encombrement axial du lanceur, par un épaulement transversal de l'entraîneur délimitant, suivant une caractéristique, axialement la deuxième surface 8' au niveau de son plus grand diamètre. L'épaulement est formé à la faveur d'un enlèvement annulaire de matière à la périphérie externe du corps de l'entraîneur permettant ainsi de loger au moins en partie les moyens élastiques 10. Cet enlèvement de matière est délimité par l'épaulement transversal 4' et par une portée annulaire globalement d'orientation axiale 4" se raccordant à la périphérie interne de l'épaulement 4'. Les moyens élastiques 10 sont logés ici entièrement dans l'enlèvement de matière et prennent appui directement sur l'épaulement 4' ou indirectement sur celui-ci à la faveur d'un revêtement. Dans tous les cas la butée 4' est portée par l'épaulement.

Bien entendu, en variante lorsque des problèmes d'encombrement radial ne se posent pas, la première butée est portée par une zone prolongeant la première surface 8 ce qui oblige à augmenter la taille radiale de la première butée.

Comme visible à la figure 4 les moyens élastiques 10 comportent une rondelle 10a non fermée et donc ouverte en 10g. L'ouverture 10g, ici radiale, confère une élasticité radiale à la rondelle 10a, qui peut alors être utilisée comme un circlips que l'on insère dans la gorge précitée du prolongement 1c en refermant la fente 10g. Cette rondelle 10 a, est avantageusement en acier à ressort. En variante l'ouverte 10g est inclinée.

En variante la rondelle 10a est fermée, comme visible dans les figures 7 à 9, et présente à sa périphérie externe au moins deux pattes radiales, de préférence diamétralement opposées, adaptées chacune à traverser un passage axial débouchant dans la gorge précitée comportant la première butée pour un montage du type baïonnette.

En variante la première butée s'étend en saillie radiale vers l'intérieur par rapport à la périphérie interne du prolongement sur une faible hauteur et est rapportée, de préférence par avance, par soudage, sertissage ou rivetage sur le prolongement 1 c. Le soudage peut être du type laser. Le sertissage peut être réalisé de manière analogue à celui de la figure 6 lorsque la jupe est massive. En variante la première butée est une rondelle qui présente en saillie des pattes radiales à sa périphérie externe. Ces pattes sont engagées chacune de manière complémentaire dans une creusure réalisée à l'extrémité libre de la jupe. Ensuite on écrase les bords latéraux des creusures pour réaliser un sertissage ; la jupe étant avantageusement en tôle emboutie. En variante on peut souder les pattes sur les bords latéraux des creusures.

En variante la première butée est réalisée par un rabattement de matière radialement vers l'intérieur de l'extrémité libre du prolongement 1 c. Le montage de la rondelle 10a est réalisé également en refermant la fente 10g.

Toutes les combinaisons sont possibles, le lanceur comportant deux sous-ensembles et ici un moyen élastique 10 supplémentaire. Ce moyen élastique 10 est un organe de fermeture du lanceur car il verrouille les deux sous-ensembles 1,2 de ce lanceur.

Plus précisément les moyens élastiques 10 sont montés sous précontrainte entre les butées précitées et permettent de maintenir en pression la deuxième surface tronconique 8' de l'entraîneur contre la première surface tronconique 8 solidaire du pignon 1,10. On notera que le diamètre moyen de la première butée, c'est à dire de la gorge, est supérieur au diamètre moyen de la deuxième butée 4'.

Les moyens élastiques 10 exercent une force prédéterminée sensiblement constante dans le temps et de relativement faible valeur qui dépend des applications.

Pus précisément cette pression initiale produit un couple de frottement entre l'entraîneur et le pignon qui est toujours, par construction, supérieur au couple nécessaire au vissage et à l'avancement du lanceur sur l'arbre 100.

Cette condition permet l'auto amorçage du mouvement du lanceur entre sa position de repos et sa position avancée contre la butée de travail, référencée en 6 à la figure 2, au début de la phase d'entraînement du moteur du véhicule via la couronne de démarrage. Lorsque le pignon atteint la butée 6 il y a compression des surfaces 8, 8' l'une contre l'autre avec un blocage

Ce blocage de mouvement entre le pignon et l'entraîneur dépend notamment des angles et des diamètres des surfaces de frottement-tronconiques.

Comme visible à la figure 2, pendant l'entraînement du moteur à combustion interne du véhicule automobile par le moteur électrique du démarreur le couple Cd - généré par le démarreur au niveau de l'arbre de sortie 100 portant l'entraîneur 2 et transformé par le dispositif à cannelures hélicoïdales 9 intervenant entre l'entraîneur 2 et l'arbre 100 - crée une force axiale Fa.

Cette force Fa est elle-même décomposée au niveau des surfaces de frottement tronconiques pour créer une force normale de contact Fc, qui génère une force tangentielle Ft aux surfaces tronconiques 8,8' fonction du coefficient de frottement entre ces surfaces. La valeur de cette force Ft multipliée par le rayon de contact moyen des surfaces de frottement tronconiques détermine le couple Ce transmis par l'embrayage conique 7.

Pour que le pignon soit entraîner normalement sans glissement il faut que la relation Ce > Cd reste toujours vraie.

Tout cela dépend des applications car le coefficient de proportionnalité entre Cd et Fa dépend de l'angle d'inclinaison des cannelures 9, du rayon moyen de ces cannelures et du coefficient de glissement entre l'arbre de sortie 100 et l'entraîneur.

Le coefficient de proportionnalité entre Fa et Fc dépend de l'angle du cône entre les deux surfaces de frottement tronconiques.

La valeur de Ft est liée à Fc et au coefficient de frottement fc entre les deux matériaux des surfaces de frottement tronconiques de l'embrayage 7. Pour éviter tout coincement on s'assurera de la relation tangente (a)> fc, dans laquelle a est la valeur du demi angle au sommet du cône de contact entre les surfaces de frottement tronconiques et fc le coefficient d'adhérence.

Toutes ces valeurs sont calculées en fonction de formules de la mécanique connues en soi et dépendent des applications.

Ces formules font intervenir le coefficient de frottement entre les cannelures de l'arbre et de l'entraîneur, le rayon moyen des cannelures, l'angle du cône des surfaces 8,8' et le coefficient de frottement de celles-ci. Tout cela influe sur le choix des matériaux de l'entraîneur, de la jupe et du pignon.

Lorsque le moteur du véhicule à démarrer le pignon 1 tourne plus vite que l'arbre de sortie 100 ce qui permet le dévissage du lanceur sur l'arbre 100. L'effort axial précédemment transmis disparaît et il ne reste plus que le couple résiduel faible du aux moyens élastiques 10 qui est transmis au moteur électrique du démarreur. Durant cette courte phase de survitesse l'embrayage se comporte comme un dispositif à roue libre avec un mouvement relatif entre les surfaces 8,8'. Le diamètre moyen de contact entre les deux surfaces 8,8' est donc également un diamètre de friction en cas de survitesse.

L'invention à pour objet de minimiser ce couple résiduel tout en respectant la relation Ce>Cd. Tout au long de la durée de vie du lanceur.

Ainsi suivant l'invention un démarreur du type sus-indiqué est caractérisé en ce que les moyens élastiques 10 comportent des languettes élastiquement déformables axialement 10b et en ce que les languettes s'étendent circonférentiellement.

Selon une caractéristique de l'invention, les languettes 10b s'étendent axialament dans le même sens pour venir en appui contre la deuxième butée.

En jouant sur la longueur circonférentielle et sur l'épaisseur des languettes, on maîtrise bien la force axiale développée par celles-ci.

A la figure 4 les languettes 10b sont en forme de bras 10b, qui s'étendent à l'intérieur de la rondelle 10a ouverte. Les bras 10b sont en forme de secteur annulaire s'étendant circonférentiellement en porte à faux de part et d'autre d'une zone d'enracinement 10d à la rondelle 10a. L'une des zones 10d est affectée symétriquement par la fente radiale 10g. Les deux zones 10d sont diamétralement opposées en sorte que les bras 10b s'étendent tête bêche et axialement dans le même sens.

La périphérie interne des deux bras 10b associés à une même zone 10d est en forme d'arc de cercle s'étendant sur plus de 90°. Bien entendu on peut augmenter le nombre de zones 10d et de bras 10c.

Les languettes en forme de bras 10c appartiennent à la zone élastique à action axiale des moyens élastiques 10, comprenant également les zones 10d.

Cette zone élastique 10b s'étend radialement au-dessous de la rondelle 10a, qui ainsi a un diamètre interne supérieur à celui de la périphérie externe des bras 10b. Les moyens élastiques 10 comportent deux zones 10a,10b à savoir une zone élastique interne fractionnée en languettes 10b, ici en forme de bras, d'orientation circonférentielle et une zone 10a externe d'arrêt en translation du pignon 1 en forme de rondelle 10a ici ouverte et diamétralement élastique.

Les extrémités libres des languettes 10b sont décalées axialement par rapport à la zone d'arrêt en fonction des applications.

Les zones 10d sont des zones de raccordement à la rondelle 10a.

Suivant une autre caractéristique ces languettes présentent une zone d'inflexion entre leur extrémité d'ancrage à la zone 10d et leur extrémité libre pour mieux contrôler la force qu'elles exercent sur la deuxième butée 4'. D'une manière générale les languettes sont cambrées axialement en direction de l'entraîneur 2 pour maintenir en contact les surfaces 8,8'. En variante les languettes sont inclinées axialement, à partir de leur extrémité à la zone d'ancrage 10d, en direction de la deuxième butée 4'. En variante une zone inclinée raccorde l'extrémité libre d'une languette à son extrémité d'ancrage à la zone 10d. Grâce à la zone inclinée créant un pli on maîtrise bien l'élasticité de la languette et l'extrémité libre d'une languette peut s'étendre parallèlement à la deuxième butée.

L'extrémité libre de la languette peut être bombée pour contact ponctuel avec la deuxième butée.

Les languettes 10b d'une manière générale sont décalées axialement par rapport à la rondelle 10a et ce en direction de la deuxième butée 4'.

Ce décalage axial détermine la précontrainte des languettes et dépend donc des applications.

On appréciera que les bras 10b ont une grande longueur circonférentielle ce qui est favorable pour le contrôle de la force axiale développée par ces bras.

En variante les languettes sont découpées circonférentiellement dans la rondelle 10a plus large.

La pièce d'attelage permet donc de relier l'entraîneur au pignon via les surfaces de frottement tronconiques et remplace le capot de la figure 1. La pièce d'attelage est solidaire du pignon en étant d'un seul tenant avec celui-ci dans les figures 2 et 3 ou en variante (figure 8) rapportée à fixation sur celui-ci. Les parois de la pièce d'attelage (son fond et sa jupe) sont continues en sorte que la pièce d'attelage est étanche, aucune ouverture existant entre le fond de la pièce d'attelage et le pignon. Ceci est favorable pour la fiabilité de fonctionnement du lanceur car les surfaces 8,8' ne sont pas souillées par des fuites d'huile de l'eau etc...

Le lanceur est également simplifié puisqu'il est dépourvu de virole externe contrairement au mode de réalisation des figures 3 et 5 du document FR-A-2 772 433.

Par simplicité dans les figures l'ensemble pignon - pièce d'attelage sera appelé pignon cloche.

Ainsi dans les figures 2 et 6 le pignon cloche est en une seule pièce en étant en une seule matière ou bi matière, tandis qu'en variante (figure 8) le pignon cloche est en deux pièces à savoir le pignon et la cloche; chaque pièce étant alors choisie de manière optimum selon sa fonction à réaliser.

Dans les figures le pignon cloche comporte, d'une part, une partie dentée constituant le pignon 1 et d'autre part, une partie tronconique, référencée en 1 b à la figure 3 appartenant à la pièce d'attelage.

La partie dentée est de forme tubulaire et présente en section les dents à flancs bombés globalement de forme trapézoïdale nécessaires à l'engrènement avec la couronne de démarrage du moteur à combustion interne du véhicule automobile. Le pignon présente donc des dents définies de manière connue par un cercle de tête, un cercle primitif et un cercle de pied.

C'est la périphérie interne de la partie tronconique qui constitue directement ou indirectement la première surface de frottement tronconique. En effet la périphérie interne de la partie tronconique 1b, peut frotter directement contre la deuxième surface de frottement tronconique appartenant à l'entraîneur ou indirectement contre la deuxième surface de frottement tronconique, l'une au moins des deux surfaces de frottement tronconique étant alors dotée d'un revêtement tel qu'une garniture de friction fixée par exemple par collage. Cela permet de contrôler notamment la force Ft précitée.

Comme garniture de friction ou de frottement on peut utiliser une garniture du type de celle décrite dans le document EP A 0 816 707 comportant un mat de fibres imprégné d'une résine thermodurcissable. Ces fibres sont cardées pour former un voile de carde et présentent avantageusement une longueur d'au moins 40 mm. Du verre est par exemple incorporé au mat. Pour plus de précisions on se reportera à ce document. Avec ce type de garniture on obtient une stabilité remarquable du coefficient de frottement du matériau ainsi que de faibles usures.

La première surface de frottement tronconique appartient donc à la périphérie interne de la jupe de la pièce d'attelage ou est rapportée sur ladite périphérie interne.

Il en est de même de la deuxième surface de frottement tronconique, qui est formé soit directement par la périphérie externe d'une portée tronconique appartenant à l'entraîneur 2 ou est rapportée sur ladite portée de la périphérie externe.

Dans tous les cas l'une au moins des deux surfaces tronconiques 8,8' comporte des rainures s'étendant d'une extrémité axiale à l'autre extrémité axiale de la surface tronconique concernée et ce de manière rectiligne ou incurvée. En variante les rainures s'étendent circonférentiellement. Un réseau de rainures croisées circonférentielles et rectilignes et/ou incurvées peut être réalisé. Ce réseau peut comporter des rainures circonférentielles raccordées aux extrémités axiales de la surface tronconique concernée par des rainures distinctes s'étendant de manière rectiligne ou incurvée. Toutes les combinaisons sont possibles. Par exemple les rainures sont ménagées à la périphérie externe de la deuxième surface, en variante à la périphérie interne de la première surface.

Grâce aux rainures on évacue les poussières et on favorise le décollement des deux surfaces l'une par rapport à l'autre, notamment en cas de survitesse.

Comme sur les pignons de lanceurs conventionnels, les dents des parties dentées 1 sont de préférence pourvues à leur extrémité libre, côté opposé à l'entraîneur 2, d'un chanfrein pour faciliter la pénétration du pignon dans la couronne de démarrage visible en C à la figure 1.

Dans ces figures 2 et 3 le fond 1a tronconique est globalement d'orientation transversale car il s'étend de manière inclinée par rapport à l'axe de symétrie axiale X-X du lanceur visible dans les figures 3, 5 et 8. Cet axe est en même temps l'axe de symétrie de l'arbre 100. En variante figure 8 le fond s'étend perpendiculairement à l'axe X-X. En effet on peut standardiser l'entraîneur et en fonction de la taille radiale et axiale du pignon incliner plus ou moins le fond 1a ou rendre celui-ci transversal. Tout cela dépend des applications.

Ainsi à la figure 3 le pignon 1 présente à son extrémité tournée vers l'entraîneur 2 un prolongement incliné 1a constituant le fond de la pièce d'attelage en forme de cloche et permettant de relier entre elles les parties 1, 1b.

Le pignon cloche est par exemple obtenu par moulage. Avantageusement le pignon cloche est obtenu par frittage en étant mono matière ou de préférence bi matière.

Le frittage bi matière est très avantageux car on a le choix pour la partie dentée d'une nuance de matériau plus spécifiquement adaptée aux besoins de l'engrenage avec la couronne de démarrage (résistance mécanique, résistance à l'usure, faible émission sonore ...) tandis que la partie tronconique est spécialement adaptée aux nécessités de l'embrayage 7 (résistance à l'usure, valeur du coefficient de frottement...).

La partie dentée 1 est obtenue par exemple par extrusion, frittage, taillage dans une barre ou emboutissage. Cette partie dentée 1 est en variante distincte de la cloche, qui présente un flasque troué centralement pour passage de l'arbre 100 et constituant le fond la cloche. Ce flasque 1a est prolongé à sa périphérie externe par la jupe tronconique 1b, elle-même prolongée par le prolongement tubulaire 1c. La première surface tronconique est constituée par la périphérie interne de la jupe 1 b.

En variante, comme visible à la figure 8, le flasque 1a est rapporté à sa périphérie interne par soudage sur le pignon présentant pour ce faire à sa périphérie interne un prolongement tubulaire 1d s'étendant en saillie axiale vers l'entraîneur et permettant de centrer le flasque 1a à sa périphérie interne. Ce flasque est calé axialement dans un sens par l'extrémité axiale adjacente des dents du pignon et dans l'autre sens par le soudage réalisé à l'extrémité libre du prolongement. Le soudage est dans une forme de réalisation réalisé de manière continue, en variante de manière discontinue. Le soudage est du type laser, du type soudage par friction ou du type soudure à l'arc.

En variante la fixation est réalisée par sertissage, l'extrémité libre du prolongement tubulaire précité étant rabattue au contact du flasque 1a lui-même en appui sur les dents du pignon 1. On peut faire appel dans ce cas à des liaisons complémentaires par exemple du type polygonal pour bloquer en rotation le flasque. Le blocage en rotation de la cloche sur le pignon est réalisé d'une manière générale par coopérations de formes. On peut tirer partie des dents du pignon pour réaliser ce calage. Par exemple le flasque 1a est emboutie localement pour formation d'au moins une saillie pénétrant de manière complémentaire entre deux dents consécutives du pignon. En variante le flasque est emboutie en sens inverse pour formation d'au moins d'une dépression dans laquelle pénètre de manière complémentaire au moins l'extrémité d'une dent du pignon, cette dent étant admise à coopérer avec les bords latéraux de la dépression. Le nombre de saillies et de dépressions dépend des applications.

En variante on peut réaliser des liaisons par frettage.

On obtient dans tous les cas une immobilisation axiale et en rotation de la cloche par rapport au pignon c'est à dire une fixation.

En variante le pignon 1 est en matière frittée et la cloche en métal massif, est montée, par l'intermédiaire de son flasque, à léger serrage sur le prolongement tubulaire saillant 1d du pignon 1 pour rester correctement positionnée sur le pignon lors de manipulations de l'ensemble ainsi formé avant passage de cet ensemble au four pour frittage du pignon. Durant ce passage au four le métal du pignon gonfle et assure ainsi, en plus des liaisons métallurgiques du frittage, une immobilisation définitive de ces deux pièces. Des liaisons précitées par coopération de formes, telles qu'un emboîtement polygonal, peuvent intervenir pour contribuer à la liaison en rotation entre ces deux pièces.

En variante la cloche est également en matière frittée de préférence différente de celle du pignon pour obtenir de bonnes caractéristiques de frottement. Les deux pièces sont alors préassemblées avant passage au four de frittage. Le coefficient de gonflement du pignon est au moins aussi grand que celui de la cloche de manière à conserver un contact serré entre ces deux pièces et favoriser la création de liaisons métallurgiques fortes. Après le frittage on obtient un ensemble monobloc avec des caractéristiques mécaniques différentes suivant les zones considérées.

Dans un mode de réalisation la partie dentée est obtenue par frittage bi matière pour obtenir, d'une part, de bonnes propriétés de coulissement le long de l'arbre 100 et, d'autre part, de bonnes propriétés pour l'engrènement avec la couronne de démarrage.

On peut concevoir que cette partie dentée soit elle-même en deux pièces à savoir un manchon interne en une matière permettant un bon coulissement le long de l'arbre 100 et un pignon monté sur la périphérie externe du manchon et présentant une matière présentant de bonnes propriétés pour l'engrènement avec la couronne de démarrage. Le prolongement tubulaire 1d constitue alors l'une des extrémités axiales du manchon.

Cela peut être réalisé de la même manière que pour l'assemblage de la cloche avec le pignon. Par exemple la partie dentée est montée à serrage sur le prolongement 1d du manchon avant une opération de frittage de l'une au moins de ces pièces. Lorsque les deux pièces sont frittées, le coefficient de gonflement du manchon est au moins égal à celui de la partie dentée. En variante une liaison par frettage est réalisée.

Dans une variante le manchon est solidaire de la cloche en étant d'un seul tenant avec celle-ci ou fixé sur celle-ci. La solution avec manchon rapporté est avantageuse car pour une taille d'arbre 100 déterminée on peut standardiser le manchon, si besoin est avec la cloche, et adapter le pignon monté sur la périphérie externe du manchon à chaque application, notamment en ce qui concerne sa longueur. On peut également positionner axialement comme on veut la partie dentée par rapport au manchon de plus grande longueur axiale que la partie dentée.

Le pignon cloche est donc en une deux ou trois pièces. On notera que le fond de la cloche se raccorde à la jupe de celle-ci soit par l'intermédiaire d'une zone arrondie, soit par l'intermédiaire d'une zone tronconique.

On peut faire le même raisonnement pour l'entraîneur 2 qui est donc en une ou plusieurs pièces chacune en matière différente pour réaliser de manière optimale sa fonction propre. Par exemple comme décrit dans le document FR A 2 772 433 l'entraîneur peut présenter une pièce métallique, telle qu'une bague dotée d'au moins une collerette, rapportée sur le corps du lanceur pour coopérer avec la fourchette des moyens mécaniques 14 de la figure 1. La bague précitée comporte dans un mode de réalisation deux collerettes en sorte qu'elle a une section en forme de U pour réception de la fourchette.

Comme visible dans les figures l'entraîneur comporte trois portions à savoir une première portion présentant à sa périphérie externe la deuxième surface tronconique. Cette première portion s'étend en saillie axiale et radiale par rapport à une deuxième portion, constituant la douille de l'entraîneur et présentant intérieurement les cannelures hélicoïdales adaptées à coopérer de manière complémentaire avec les cannelures hélicoïdales de l'arbre 100. Une gorge annulaire de réception de la fourchette des moyens mécaniques 14 de la figure 1 est ménagée à la périphérie externe de la deuxième portion. Cette gorge, délimitée par deux flancs transversaux adaptés à coopérer avec la fourchette des moyens 14, appartient à la troisième portion de l'entraîneur 2 et est décalée axialement par rapport à la première portion. Cette gorge s'étend radialement au-dessus des cannelures de la deuxième portion en étant plus courte axialement. La deuxième surface tronconique, avantageusement dotée de rainures de manière précitée, s'étend en saillie radiale par rapport à la gorge et est raccordée à la gorge via l'enlèvement de matière 4',4"réalisé dans la première portion pour logement des moyens élastiques 10. Une face tronconique relie l'extrémité concernée de la deuxième portion à l'extrémité de plus petit diamètre de la deuxième surface tronconique pour diminuer la quantité de matière de l'entraîneur ici en matière plastique moulable avantageusement renforcée par des fibres. En variante des revêtements anti usure sont effectués sur les deux flancs délimitant la gorge, notamment lorsque la fourchette des moyens mécaniques 14 est métallique. Ces revêtements consistent par exemple en des rondelles métalliques fixées par surmoulage sur les flancs de la gorge, en variante en des demi rondelles ou pièce en forme de U fixées par encliquetage sur les flancs de la gorge. En variante le flanc de la gorge le plus éloigné du pignon est formé à la faveur d'une rondelle rapportée, toutes les combinaisons étant possibles. La deuxième surface de frottement peut être formée également à la faveur d'un revêtement, tel que la garniture de frottement précitée en sorte que le corps de l'entraîneur, et donc la deuxième portion de celui-ci, est avantageusement en une matière présentant les qualités requises pour coopérer avec les cannelures de l'arbre 100. L'entraîneur 2 en variante est obtenue par frittage en une seule matière ou en variante en plusieurs matière comme le pignon. On appréciera que lorsque la cloche et/ou l'entraîneur sont en matière frittée que l'on peut incorporer dans celle-ci les charges voulues pour obtenir le coefficient de frottement souhaité pour les surfaces 8,8'. Par exemple ces surfaces peuvent contenir de la poudre de cuivre, du carbone par exemple sous la forme de graphite, de la silice et du molydène.

La fourchette des moyens 14 est avantageusement en matière plastique pour limiter les phénomènes d'incrustation dans l'entraîneur et réduire les bruits. En variante la gorge et donc la deuxième portion de l'entraîneur peuvent s'étendre radialement au-dessus de la deuxième surface 8' et de la jupe de la pièce d'attelage.

Bien entendu on peut inverser les structures la pièce d'attelage de forme annulaire et creuse appartenant alors à l'entraîneur 2.

L'extrémité libre de la jupe 2b de la pièce d'attelage s'étend en saillie axiale par rapport à la première surface 8 et porte les moyens élastiques 10.

Ainsi à la figure 5 la jupe 2b et le flasque 2a de la pièce d'attelage en forme de cloche appartiennent à l'entraîneur 2, qui porte à sa périphérie externe un cône femelle dans lequel pénètre un cône mâle porté par le pignon. La deuxième surface de frottement tronconique 8' entoure la première surface de frottement tronconique en étant plus longue axialement que celle-ci. C'est l'entraîneur 2 qui porte la cloche dotée d'une jupe 2b annulaire dirigée axialement vers les dents du pignon. Cette jupe est d'épaisseur non constante en étant délimitée à sa périphérie externe par une paroi annulaire d'orientation axiale, c'est à dire cylindrique, et à sa périphérie interne par la deuxième surface 8' de forme concave, la première surface 8 complémentaire étant de forme convexe. La jupe se raccorde à la faveur du flasque transversal 2a à la deuxième portion précitée de l'entraîneur 2. La cloche appartient à la première portion de l'entraîneur 2. La gorge de montage de la rondelle des figures 3 et 4 appartient à l'extrémité libre de la jupe, tandis que l'enlèvement de matière de logement des moyens élastiques 10 est formée dans une portion supplémentaire du pignon 1 équivalente à la première portion de l'entraîneur du mode de réalisation des figures 3 et 4. On peut donc utiliser la même rondelle pour les figures 3 et 5.

On notera que la portion supplémentaire du pignon constitue un prolongement s'étendant en saillie radiale et axiale par rapport aux dents du pignon 1. C'est la périphérie externe de ce prolongement qui porte la première surface 8, dont le diamètre moyen constitue le diamètre moyen de contact des surfaces 8,8'. Ce diamètre moyen est supérieur au diamètre du cercle de tête de la partie dentée du pignon 1.

Dans les figures 3 et 5 le plus petit diamètre de la première surface 8 est supérieur au diamètre du cercle de tête de la partie dentée du pignon 1. Le prolongement est ici venu de moulage avec le pignon 1.

La jupe 2b est massive en sorte que la gorge est réalisée à l'extrémité libre de la jupe 2b dans la partie saillante de la deuxième surface 8' par rapport à la première surface 8'. Le flasque 2a,ici transversal en variante tronconique, et la jupe 2b sont monoblocs avec l'entraîneur 2. En variante la cloche est rapportée sur l'entraîneur par exemple de la même manière que l'assemblage de la figure 8. Dans ce cas la deuxième portion de l'entraîneur présente intérieurement un prolongement tubulaire saillant et épaulé pour montage et calage axial dans un sens du flasque 2a. Toutes les formes d'assemblage précitées sont transposables dans ce mode de configuration et vice versa.

On notera que le flasque 2a forme l'un des flancs de la gorge de réception de la fourchette des moyens 14.

Bien entendu en variante (figures 6 et 7), la rondelle 10a est continue et est prolongée à sa périphérie externe par une partie tubulaire 10f dotée à son extrémité libre de pattes 10c rabattues au contact d'une face inclinée 2d appartenant à une protubérance 2e annulaire que présente la jupe 2a en saillie radiale à sa périphérie externe. Cette protubérance se raccorde à la face transversale de l'extrémité libre de la jupe et présente une portée cylindrique 2f de centrage pour la partie tubulaire 10f.

Les moyens élastiques comportent donc une zone d'arrêt en translation du pignon en forme de capot annulaire portée par la jupe.

La face transversale de l'extrémité libre de la jupe constitue la première butée.

La face inclinée 2d peut être dotée de dépressions pour blocage en rotation du capot par coopération des pattes 10c avec les bords latéraux des dépressions. Le capot est immobilisé axialement à la faveur de la face 2d et de la face de l'extrémité libre de la jupe.

Dans les figures précédentes l'immobilisation axiale est réalisée avec un léger jeu par montage de la rondelle 10a dans la gorge.

En variante une gorge est réalisée dans la portée 2f et la partie tubulaire 10f est emboutie localement dans la gorge. Les pattes de sertissage 10c sont alors supprimées.

En variante la partie tubulaire 10f est emboutie localement par avance vers l'intérieur et le montage de la partie tubulaire 10f sur la portée 2f est réalisé par encliquetage des zones embouties de la partie 10f dans la gorge de la partie 10f.

En variante la rondelle 10a présente des pattes axiales à sa périphérie externe dotées à leur extrémité libre chacune d'un trou pour montage par encliquetage sur un ergot complémentaire issu de la périphérie externe de la jupe. Pour ce faire chaque trou appartient à une zone élastique formée par exemple à la faveur d'un pliage en accordéon.

En variante les pattes axiales sont dotées à leur extrémité libre de saillies inclinées élastiquement déformables pour formation de griffes destinées à venir en prise par encliquetage avec les ergots.

En variante les griffes sont formées à la faveur des zones d'enracinement 10d comme visible dans les figures 9 et 10. Ces griffes 10 e viennent alors en prise élastiquement avec la périphérie interne du prolongement 1c ou 2c de la jupe constituant l'extrémité libre de celle-ci. A la figure 10 on a représenté en pointillés une partie du prolongement 1c. Dans ce cas la rondelle 10a est alors continue et présente quatre bras 10b et deux zones d'enracinement 10d comme à la figure 7. Les zones 10d sont délimitées circonférentiellement à leur périphérie externe par deux fentes borgnes 110 se raccordant chacune à une griffe 10 e s'étendant en saillie radiale par rapport à la périphérie externe de la rondelle 10a. La hauteur de ces griffes est ici faible. Ces griffes 10e sont reliées l'une à l'autre par un tronçon plat 111 délimitant la périphérie externe d'une zone d'enracinement 10d.

Les griffes sont délimitées chacune par le bord d'une fente 110, un tronçon rectiligne constituant la périphérie externe de la griffe 10e et un tronçon incliné de raccordement au tronçon plat 111.

Chaque zone d'enracinement 10d présente ainsi à sa périphérie externe une languette 112 moins large circonférentiellement que ladite zone 10d.

Chaque languette 112 présente à chacune de ses extrémités une griffe 10e. Les languettes 112 peuvent fléchir axialement.

Le diamètre externe des griffes 10e est légèrement supérieur au diamètre interne du prolongement 1c en sorte que lorsqu'on emmanche axialement les moyens élastiques dans le prolongement 1c les languettes fléchissent axialement en sorte que les griffes restent en prise sous pression avec l'alésage interne du prolongement interne 1c comme visible à la figure 10. Lorsque les moyens élastiques 10 sont l'objet d'un effort agissant en sens inverse à celui de l'emmanchement, les moyens élastiques se bloquent par arc-boutement. Les languettes 112 ont globalement la forme d'une tête de chat avec deux oreilles formées par des griffes 10e.

On peut supprimer la gorge des figures 3 et 5. En variante la gorge est conservée en sorte que le blocage axial des moyens élastiques 10 est amélioré.

En variante la gorge est remplacée par des dépressions de réception des griffes 10e.

Avantageusement les griffes 10 e sont montées sous pression dans la gorge ou les dépressions pour éviter tout mouvement suite à des vibrations.

Ainsi qu'il ressort à l'évidence de la description et des dessins on augmente la capacité de transmission de couple du lanceur grâce à un diamètre moyen de friction important pour un encombrement diamétral donné. On réduit également le nombre de pièces ainsi que l'encombrement axial et diamétral du lanceur. On obtient une bonne étanchéité en ce qui concerne des projections d'huile ou d'eau dirigées vers le pignon grâce à la cloche. On a la possibilité de choisir des matériaux différents, l'un bien adapté aux caractéristiques mécaniques nécessitées par le pignon, l'autre étant bien adapté aux besoins de friction et de résistance à l'usure de l'embrayage conique.

En variante le capot des figures 6 et 7 peut remplacer le capot de la figure 5 du document FR-A-2 772 433 ce qui permet une réduction du nombre de pièces.

Avantageusement on fait appel à un dispositif électronique de commande pour l'alimentation électrique du bobinage 12a et du moteur électrique du démarreur pour réduire la durée de la phase de fonctionnement « en roue libre » de l'embrayage conique et s'affranchir du temps de réaction du conducteur. Par exemple le dispositif électronique est du type de celui décrit dans le document FR A 2 795 884 alimentant le bobinage 12a par l'intermédiaire d'un transistor selon une tension en créneau de type « Pulse Width Modulation» (PWM) en français.
Plus précisément on fait varier le courant efficace dans le bobinage 12a au cours du déplacement du noyau 12b vers sa position de contactage, pour fermer le contact mobile 13 et alimenter le moteur électrique M.
On adopte au cours de ce déplacement :
- une première phase d'entraînement à courant efficace suffisamment élevé pour mettre le noyau 12b en mouvement, puis,
- une seconde phase d'entraînement à courant efficace plus faible,
- on met en oeuvre, pendant la seconde phase, après un temps prédéterminé ou déterminé, un accroissement continu de l'intensité efficace. Pour plus de précisions on se reportera à ce document.
Grâce au dispositif électronique on peut choisir un matériau de friction moins noble pour les surfaces de frottement 8,8' car on contrôle mieux la phase de survitesse et donc de glissement entre les deux surfaces. Cela permet de réduire les coûts.
Avantageusement, pour ménager le lanceur à embrayage conique, un amortisseur à moyens élastiques à action circonférentielle et/ou un limiteur de couple sont en variante associés au lanceur.
Ainsi dans un premier mode de réalisation l'amortisseur de torsion et le limiteur de couple sont associés au réducteur à train épicycloïdal de la figure 1 interposé entre le moteur électrique et l'arbre de sortie 100 sur lequel est monté l'entraîneur 2.
Pour cela on peut adopter par exemple la solution décrite dans le document FR 99 16726 déposé le 30/12/1999. Le limiteur de couple est alors interposé axialement entre la couronne du réducteur et un flasque d'un boîtier à l'intérieur duquel est montée à rotation la couronne.

Les moyens élastiques consistent alors en au moins un bloc amortisseur déformable élastiquement, en étant par exemple en élastomère, liant en rotation au boîtier un disque appartenant au limiteur de couple. En variante la couronne de démarrage appartient à la masse secondaire d'un volant amortisseur liée à la boîte de vitesses du véhicule automobile. Cette masse secondaire est reliée par un amortisseur de torsion et un limiteur de couple à un volant primaire lié au vilebrequin du véhicule comme décrit dans le document FR A 2 598 475.

En variante seul l'un des deux dispositifs limiteur de couple amortisseur de torsion est présent.

En variante on peut prévoir les deux dispositifs précités.

La présence d'une fourchette n'est pas obligatoire. Le démarreur peut avoir ainsi la constitution de celui décrit dans le document EP-A-0 867 613 décrivant une solution avec un réducteur dont l'arbre de sortie agit sur le lanceur.

## Revendications

1. Démarreur de véhicule automobile comportant un lanceur doté d'un pignon (1), d'un entraîneur (2) et d'un dispositif d'attelage à embrayage conique (7) pour atteler le pignon (1) à l'entraîneur (2), dans lequel l'embrayage conique (7) comporte une première surface de frottement tronconique (8), dite première surface, solidaire du pignon (1) et une deuxième surface de frottement tronconique (8'), dite deuxième surface, de forme complémentaire à la première surface (8) et solidaire de l'entraîneur (2) et dans lequel le dispositif d'attelage comporte, d'une part, une pièce d'attelage (1a, 1b, 1 c-2a, 2b, 2c, 2e) de forme creuse présentant un fond (1a-2a) prolongé par une jupe annulaire (1b-2b) dirigée axialement vers l'un des éléments pignon (1) ou entraîneur (2) et, d'autre part, des moyens élastiques (10) à action axiale prenant appui sur une première butée solidaire de la jupe de la pièce d'attelage pour action sur une deuxième butée (4') solidaire de l'un des éléments pignon (1) ou entraîneur (2), **caractérisé en ce que** les moyens élastiques à action axiale (10) comportent des languettes (10b) déformables axialement **en ce que** lesdites languettes s'étendent axialement dans le même sens et **en ce que** lesdites languettes s'étendent circonférentiellement.

2. Démarreur selon la revendication 1, **caractérisé en ce que** les languettes (10b) sont cambrées axialement.

3. Démarreur selon la revendication 1 ou 2, **caractérisé en ce que** les languettes (10b) présentent une zone d'inflexion.

4. Démarreur selon l'une quelconque des revendications précédentes, **caractérisé en ce que** les languettes (10) présentent une zone inclinée se raccordant à l'extrémité libre de la languette (10b).

5. Démarreur selon l'une quelconque des revendications précédentes, **caractérisé en ce que** les extrémités libres des languettes sont bombées pour contact local avec la deuxième butée.

6. Démarreur selon l'une quelconque des revendications précédentes, **caractérisé en ce que** les moyens élastiques à action axiale (10) comportent une rondelle (10a) et **en ce que** les languettes sont découpées circonférentiellement dans la rondelle (10a).

7. Démarreur selon la revendication 6, **caractérisé en ce que** les languettes élastiques (10b) se raccordent à la périphérie interne de la rondelle (10a) à la faveur de zones d'enracinement (10d) et sont décalées axialement par rapport à la rondelle (10a) en direction de la deuxième butée (4').

8. Démarreur selon la revendication 6 ou 7, **caractérisé en ce que** les languettes (10b) consistent en des bras en forme de secteur annulaire s'étendant circonférentiellement en porte-à-faux de part et d'autre d'une zone d'enracinement (10d).

9. Démarreur selon l'une quelconque des revendications 6 à 8, **caractérisé en ce que** la rondelle (10a) présente une fente (10g).

10. Démarreur selon la revendication 9 prise en combinaison avec la revendication 8, **caractérisé en ce que** la fente (10g) est une fente radiale affectant symétriquement une zone d'enracinement (10d).

11. Démarreur selon l'une quelconque des revendications 6 à 10, **caractérisé en ce que** la rondelle (10a) est prolongée à sa périphérie externe par une partie d'orientation axiale pour formation d'un capot.

12. Démarreur selon l'une quelconque des revendications précédentes, **caractérisé en ce que** les moyens élastiques (10) sont portés par la jupe (1b-2b) de la pièce d'attelage et **en ce que** ladite jupe (1b-2b) porte intérieurement l'une des première et deuxième surfaces (8,8').

13. Démarreur selon la revendication 12, **caractérisé en ce que** la jupe (1b-2b) est, via le fond (1a-2a) de la pièce d'attelage, solidaire de l'un des éléments pignon (1) ou entraîneur (2) et porte intérieurement la surface (8,8'), dite surface de frottement radialement externe, associée à cet élément.

14. Démarreur selon la revendication 13, **caractérisé en ce que** les moyens élastiques (10) sont portés par l'extrémité libre de la jupe qui porte la surface de frottement (8, 8') radialement externe.

15. Démarreur selon l'une quelconque des revendications précédentes, **caractérisé en ce que** le diamètre moyen de contact de la première surface (8) avec la deuxième surface (8') est supérieur au diamètre du cercle de tête des dents du pignon (1).

16. Démarreur selon l'une quelconque des revendications précédentes prises en combinaison avec la revendication 12, **caractérisé en ce que** la première ou la deuxième surface (8,8') portée par la jupe (1 b,2b) est plus longue axialement que l'autre deuxième ou première surface (8', 8).

17. Démarreur selon l'une quelconque des revendications précédentes, **caractérisé en ce que** les moyens élastiques (10) sont portés par l'extrémité libre de la jupe (1 b-2b) et **en ce que** les moyens élastiques (10) s'étendent en saillie axiale par rapport à ladite autre deuxième ou première surface (8',8).

18. Démarreur selon la revendication 17, **caractérisé en ce que** l'extrémité axiale de plus grand diamètre de ladite autre surface (8',8) est délimitée par un épaulement transversal portant la deuxième butée (4') pour implantation à compression axiale des moyens élastiques à action axiale (10) entre cette deuxième butée (4') et une première butée portée par l'extrémité libre de la jupe de la pièce d'attelage.

19. Démarreur selon la revendication 18, **caractérisé en ce que** l'épaulement transversal est prolongé à sa périphérie interne par une portée annulaire (4") globalement d'orientation axiale délimitant avec le dit épaulement un enlèvement de matière pour loger au moins en partie les moyens élastiques à action axiale (10).

20. Démarreur selon la revendication 9, **caractérisé en ce que** les moyens élastiques à action axiale (10) ont une forme de circlips et sont reçus dans une gorge réalisée à la périphérie interne de l'extrémité libre de la jupe.

21. Démarreur selon l'une quelconque des revendications 1 à 19, **caractérisé en ce que** les moyens élastiques à action axiale présente des griffes (10e) destinées à venir en prise élastiquement avec la périphérie interne de l'extrémité libre de la jupe de la pièce d'attelage.

22. Démarreur selon la revendication 21 prise en combinaison avec la revendication 6, **caractérisé en ce que** les griffes (10 e) appartiennent à des languettes (112) formées à la périphérie externe des zones d'enracinement (10d) à la faveur de fentes borgnes (110) et **en ce que** les griffes (10 e) s'étendent en saillie radiale par rapport à la rondelle (10a).

23. Démarreur selon la revendication 17, **caractérisé en ce que** le capot est fixé sur l'extrémité libre de la jupe (1 b,2b) à la périphérie externe de celle-ci.

24. Démarreur selon l'une quelconque des revendications précédentes **caractérisé en ce** la jupe de la pièce d'attelage est de forme tronconique.

25. Démarreur selon l'une quelconque des revendications précédentes, **caractérisé en ce que** l'une des première et seconde surfaces de frottement (8,8') présente à sa périphérie respectivement interne et externe des rainures.

26. Démarreur selon la revendication 25, **caractérisé en ce que** l'une au moins des premières et secondes surfaces de frottement (8,8') est constituée par une garniture de frottement.

27. Démarreur selon l'une quelconque des revendications précédentes **caractérisé en ce que** la pièce d'attelage est solidaire du pignon.

28. Démarreur selon la revendication 27, **caractérisé en ce que** le pignon (1) est monobloc avec la pièce d'attelage globalement en forme de cloche.

29. Démarreur selon la revendication 27, **caractérisé en ce que** la pièce d'attelage est fixée sur le pignon (10).

30. Démarreur selon l'une quelconque des revendications 1 à 26, **caractérisé en ce que** la pièce d'attelage est solidaire de l'entraîneur (2).

31. Démarreur selon l'une quelconque des revendications précédentes, **caractérisé en ce qu'**il présente au moins un bobinage (12a) pilotant son moteur électrique (M) et adapté à être alimenté électriquement par un dispositif électronique de commande pour la manoeuvre du lanceur.

## Claims

1. A motor vehicle starter comprising a starter head which includes a pinion (1), a drive member (2), and coupling means comprising a conical clutch (7) for coupling the pinion (1) to the drive member (2), wherein the conical clutch (7) includes a first frusto-conical friction surface (8), referred to as the first surface, which is fixed with respect to the pinion (1), and a second frusto-conical friction surface (8'), referred to as the second surface and having a form complementary to the first surface (8), the second surface being fixed with respect to the drive member (2), and wherein the coupling means comprises, firstly, a hollow coupling member (1a, 1b, 1c; 2a, 2b, 2c, 2e) having a base portion (1a, 2a) extended in length by an annular skirt portion (1b, 2b) which is directed axially towards one of the elements consisting of the pinion (1) and drive member (2), and secondly, axially acting resilient means (10) bearing on a first abutment element, which is fixed with respect to the skirt portion of the coupling member, whereby to act on a second abutment element (4') which is fixed with respect to one of the elements consisting of the pinion (1) and drive member (2), **characterised in that** the axially acting resilient means (10) comprise axially deformable tongues (10b), **in that** the said tongues extend axially in the same direction, and **in that** the said tongues extend circumferentially.

2. A starter according to Claim 1, **characterised in that** the tongues (10b) are bent axially.

3. A starter according to Claim 1 or Claim 2, **characterised in that** the tongues (10b) have a zone of inflexion.

4. A starter according to any one of the preceding Claims, **characterised in that** the tongues (10) have an inclined zone joined to the free end of the tongue (10b).

5. A starter according to any one of the preceding Claims, **characterised in that** the free ends of the tongues are bowed so as to make local contact with the second abutment element.

6. A starter according to any one of the preceding Claims, **characterised in that** the axially acting resilient means (10) include a hoop portion (10a), and **in that** the tongues are pressed out circumferentially in the hoop portion (10a).

7. A starter according to Claim 6, **characterised in that** the elastic tongues (10b) are joined to the inner periphery of the hoop portion (10a) in root zones (10d) and are offset axially with respect to the hoop portion (10a) in the direction of the second abutment element (4').

8. A starter according to Claim 6 or Claim 7, **characterised in that** the tongues (10b) consist of arms in the form of an annular sector cantilevered circumferentially on either side of a root zone (10d).

9. A starter according to any one of Claims 6 to 8, **characterised in that** the hoop portion (10a) has a split (10g).

10. A starter according to Claim 9 taken in combination with Claim 8, **characterised in that** the split (10g) is a radial split which divides one root zone (10d) symmetrically.

11. A starter according to any one of Claims 6 to 10, **characterised in that** the hoop portion (10a) is extended in length at its outer periphery in an axially oriented portion so as to constitute a shroud.

12. A starter according to any one of the preceding Claims, **characterised in that** the resilient means (10) are carried by the skirt portion (1b, 2b) of the coupling member, and **in that** the said skirt portion (1b, 2b) carries internally one of the first and second surfaces (8, 8').

13. A starter according to Claim 12, **characterised in that** the skirt portion is, via the base portion (1a, 2a) of the coupling member, fixed with respect to an element consisting of either the pinion (1) or the drive member (2), and carries internally the surface (8, 8'), referred to as a radially outer friction surface, which is associated with the said element.

14. A starter according to Claim 13, **characterised in that** the resilient means (10) are carried by the free end of the skirt portion which has the radially outer friction surface.

15. A starter according to any one of the preceding Claims, **characterised in that** the mean diameter of contact between the first surface (8) and the second surface (8') is greater than the diameter of the tip circle of the teeth of the pinion (1).

16. A starter according to any one of the preceding Claims in combination with Claim 12, **characterised in that** the first or the second surface (8, 8') carried by the skirt portion (1b, 2b) has a greater axial length than the other said surface, namely the second or the first surface (8', 8).

17. A starter according to any one of the preceding Claims, **characterised in that** the axially acting resilient means (10) are carried by the free end of the skirt portion (1b, 2b), and **in that** the resilient means (10) project radially with respect to the other said surface, namely the second or the first surface (8', 8).

18. A starter according to Claim 17, **characterised in that** the axial end of greatest diameter of the inner surface (8', 8) is delimited by a transverse shoulder carrying the second abutment element (4') for the fitting of axially acting resilient means (10) under axial compression between the said second abutment element (4') and a first abutment element carried by the free end of the skirt portion of the coupling member.

19. A starter according to Claim 18, **characterised in that** the transverse shoulder is extended in length at its inner periphery in a generally axially oriented annular surface (4") which with the said shoulder delimits, by absence of material, a space for at least partially fitting the axially acting resilient means (10) therein.

20. A starter according to Claim 9, **characterised in that** the axially acting resilient means (10) are in the from of circlips, and are received in a groove formed at the inner periphery of the free end of the skirt portion.

21. A starter according to any one of Claims1 to 19, **characterised in that** the axially acting resilient means have claws (10e) which are adapted to come into engagement elastically with the inner periphery of the free end of the skirt portion of the coupling member.

22. A starter according to Claim 21 taken in combination with Claim 6, **characterised in that** the claws (10e) are part of tongues (112) formed at the outer periphery of the root zones (10d) and defined by blind slots (110), and **in that** the claws (10e) project radially with respect to the hoop portion (10a).

23. A starter according to Claim 17, **characterised in that** the shroud is fixed on the free end of the skirt portion (1b, 2b), at the outer periphery of the latter.

24. A starter according to any one of the preceding Claims, **characterised in that** the skirt portion of the coupling member is of frusto-conical form.

25. A starter according to any one of the preceding Claims, **characterised in that** one of the first and second friction surfaces (8, 8') has grooves at its inner periphery and outer periphery, respectively.

26. A starter according to Claim 25, **characterised in that** at least one of the first and second friction surfaces (8, 8') is defined by a friction liner.

27. A starter according to any one of the preceding Claims, **characterised in that** the coupling member is fixed with respect to the pinion.

28. A starter according to Claim 27, **characterised in that** the pinion (1) is formed in one piece with the coupling member, the said piece being generally in the form of a bell.

29. A starter according to Claim 27, **characterised in that** the coupling member is fixed on the pinion (10).

30. A starter according to any one of Claims 1 to 26, **characterised in that** the coupling member is fixed with respect to the drive member (2).

31. A starter according to any one of the preceding Claims, **characterised in that** it includes at least one winding (12a) for controlling its electric motor (M) and adapted to be supplied with electrical power by an electronic control means for actuation of the starter head.

## Patentansprüche

1. Kraftfahrzeuganlasser, umfassend eine Einspurvorrichtung mit einem Ritzel (1), einem Mitnehmer (2) und einer Verbindungsvorrichtung mit Konuskupplung (7), um das Ritzel (1) kraftschlüssig mit dem Mitnehmer (2) zu verbinden, wobei die Konuskupplung (7) eine fest mit dem Ritzel (1) verbundene, als erste Fläche bezeichnete erste kegelstumpfförmige Reibfläche (8) und eine als zweite Fläche bezeichnete zweite kegelstumpfförmige Reibfläche (8') umfasst, die formschlüssig mit der ersten Fläche (8) ausgeführt und fest mit dem Mitnehmer (2) verbunden ist, und wobei die Verbindungsvorrichtung einerseits ein hohlförmiges Verbindungsteil (1 a, 1b, 1c - 2a, 2b, 2c, 2e) umfasst, das einen Boden (1 a-2a) aufweist, der durch eine axial zu einem der Elemente Ritzel (1) oder Mitnehmer (2) gerichtete ringförmige Einfassung (1 b-2b) verlängert wird, und andererseits axial wirksame elastische Mittel (10), die an einem ersten Anschlag zur Anlage kommen, der fest mit der Einfassung des Verbindungsteils verbunden ist, um auf einen fest mit einem der Elemente Ritzel (1) oder Mitnehmer (2) verbundenen zweiten Anschlag (4') einzuwirken, **dadurch gekennzeichnet, dass** die axial wirksamen elastischen Mittel (10) axial verformbare Zungen (10b) umfassen, dass sich die besagten Zungen axial in der gleichen Richtung erstrecken und dass sich die besagten Zungen umfangsmäßig erstrecken.

2. Anlasser nach Anspruch 1, **dadurch gekennzeichnet, dass** die Zungen (10b) axial gewölbt sind.

3. Anlasser nach Anspruch 1 oder 2, **dadurch gekennzeichnet, dass** die Zungen (10b) einen Einbiegungsbereich aufweisen.

4. Anlasser nach einem der vorangehenden Ansprüche, **dadurch gekennzeichnet, dass** die Zungen (10) einen geneigten Bereich aufweisen, der sich an das freie Ende der Zunge (10b) anschließt.

5. Anlasser nach einem der vorangehenden Ansprüche, **dadurch gekennzeichnet, dass** die freien Enden der Zungen für den örtlichen Kontakt mit dem zweiten Anschlag ausgebaucht sind.

6. Anlasser nach einem der vorangehenden Ansprüche, **dadurch gekennzeichnet, dass** die axial wirksamen elastischen Mittel (10) eine Scheibe (10a) umfassen und dass die Zungen umfangsmäßig aus der Scheibe (10a) ausgeschnitten sind.

7. Anlasser nach Anspruch 6, **dadurch gekennzeichnet, dass** sich die elastischen Mittel (10b) über Verwurzelungsbereiche (10d) an den inneren Umfang der Scheibe (10a) anschließen und im Verhältnis zur Scheibe (10a) in Richtung des zweiten Anschlags (4') axial versetzt sind.

8. Anlasser nach Anspruch 6 oder 7, **dadurch gekennzeichnet, dass** die Zungen (10b) aus Armen in Form eines ringförmigen Sektors bestehen, die sich umfangsmäßig überstehend beiderseits eines Verwurzelungsbereichs (10d) erstrecken.

9. Anlasser nach einem der Ansprüche 6 bis 8, **dadurch gekennzeichnet, dass** die Scheibe (10a) einen Schlitz (10g) aufweist.

10. Anlasser nach Anspruch 9 in Kombination mit Anspruch 8, **dadurch gekennzeichnet, dass** der Schlitz (10g) ein radialer Schlitz ist, der symmetrisch auf einen Verwurzelungsbereich (10d) übergreift.

11. Anlasser nach einem der Ansprüche 6 bis 10, **dadurch gekennzeichnet, dass** die Scheibe (10a) an ihrem äußeren Umfang durch einen axial ausgerichteten Teil zur Bildung einer Kappe verlängert wird.

12. Anlasser nach einem der vorangehenden Ansprüche, **dadurch gekennzeichnet, dass** die elastischen Mittel (10) an der Einfassung (1b-2b) des Verbindungsteils angebracht sind und dass die besagte Einfassung (1 b-2b) innen eine der ersten und zweiten Flächen (8, 8') trägt.

13. Anlasser nach Anspruch 12, **dadurch gekennzeichnet, dass** die Einfassung (1b-2b) über den Boden (1a-2a) des Verbindungsteils, fest mit einem der Elemente Ritzel (1) oder Mitnehmer (2) verbunden ist und innen die diesem Element zugeordnete als radial äußere Reibfläche bezeichnete Fläche (8, 8') trägt.

14. Anlasser nach Anspruch 13, **dadurch gekennzeichnet, dass** die elastischen Mittel (10) am freien Ende der Einfassung angebracht sind, welche die radial äußere Reibfläche (8, 8') trägt.

15. Anlasser nach einem der vorangehenden Ansprüche, **dadurch gekennzeichnet, dass** der mittlere Kontaktdurchmesser der ersten Fläche (8) mit der zweiten Fläche (8') größer als der Kopfkreisdurchmesser der Zähne des Ritzels (1) ist.

16. Anlasser nach einem der vorangehenden Ansprüche in Kombination mit Anspruch 12, **dadurch gekennzeichnet, dass** die erste oder die zweite Fläche (8, 8'), die an der Einfassung (1b, 2b) angebracht ist, axial länger als die andere zweite oder erste Fläche (8', 8) ist.

17. Anlasser nach einem der vorangehenden Ansprüche, **dadurch gekennzeichnet, dass** die elastischen Mittel (10) an dem freien Ende der Einfassung (1 b-2b) angebracht sind und dass sich die elastischen Mittel (10) axial vorstehend im Verhältnis zu der besagten anderen zweiten oder ersten Fläche (8', 8) erstrecken.

18. Anlasser nach Anspruch 17, **dadurch gekennzeichnet, dass** das axiale Ende mit größerem Durchmesser der besagten anderen Fläche (8', 8) durch eine Querschulter begrenzt ist, die den zweiten Anschlag (4') trägt, für die mit axialem Zusammendrücken erfolgende Anordnung der axial wirksamen elastischen Mittel (10) zwischen diesem zweiten Anschlag (4') und einem am freien Ende der Einfassung des Verbindungsteils angebrachten ersten Anschlag.

19. Anlasser nach Anspruch 18, **dadurch gekennzeichnet, dass** die Querschulter an ihrem inneren Umfang durch eine insgesamt axial ausgerichtete ringförmige Auflagefläche (4") verlängert wird, die zusammen mit der besagten Schulter eine Ausnehmung begrenzt, um wenigstens teilweise die axial wirksamen elastischen Mittel (10) aufzunehmen.

20. Anlasser nach Anspruch 9, **dadurch gekennzeichnet, dass** die axial wirksamen elastischen Mittel (10) die Form eines Sicherungsrings haben und in einer am inneren Umfang des freien Endes der Einfassung eingearbeiteten Auskehlung eingesetzt sind.

21. Anlasser nach einem der Ansprüche 1 bis 19, **dadurch gekennzeichnet, dass** die axial wirksamen elastischen Mittel Krallen (10e) aufweisen, die dazu bestimmt sind, mit dem inneren Umfang des freien Endes der Einfassung des Verbindungsteils elastisch in Eingriff zu kommen.

22. Anlasser nach Anspruch 21 in Kombination mit Anspruch 6, **dadurch gekennzeichnet, dass** die Krallen (10e) zu Zungen (112) gehören, die am äußeren Umfang der Verwurzelungsbereiche (10d) mittels Blindschlitzen (110) ausgebildet sind, und dass sich die Krallen (10e) radial vorstehend im Verhältnis zur Scheibe (10a) erstrecken.

23. Anlasser nach Anspruch 17, **dadurch gekennzeichnet, dass** die Kappe am freien Ende der Einfassung (1b, 2b) an deren äußerem Umfang befestigt ist.

24. Anlasser nach einem der vorangehenden Ansprüche, **dadurch gekennzeichnet, dass** die Einfassung des Verbindungsteils kegelstumpfförmig ausgebildet ist.

25. Anlasser nach einem der vorangehenden Ansprüche, **dadurch gekennzeichnet, dass** eine der ersten und zweiten Reibflächen (8, 8') an ihrem inneren bzw. äußeren Umfang Nuten aufweist.

26. Anlasser nach Anspruch 25, **dadurch gekennzeichnet, dass** wenigstens eine der ersten und zweiten Reibflächen (8, 8') aus einem Reibbelag besteht.

27. Anlasser nach einem der vorangehenden Ansprüche, **dadurch gekennzeichnet, dass** das Verbindungsteil fest mit dem Ritzel verbunden ist.

28. Anlasser nach Anspruch 27, **dadurch gekennzeichnet, dass** das Ritzel (1) einteilig mit dem insgesamt glockenförmigen Verbindungsteil ausgeführt ist.

29. Anlasser nach Anspruch 27, **dadurch gekennzeichnet, dass** das Verbindungsteil am Ritzel (10) befestigt ist.

30. Anlasser nach einem Ansprüche 1 bis 26, **dadurch gekennzeichnet, dass** das Verbindungsteil fest mit dem Mitnehmer (2) verbunden ist.

31. Anlasser nach einem der vorangehenden Ansprüche, **dadurch gekennzeichnet, dass** er wenigstens eine Wicklung (12a) aufweist, die seinen Elektromotor (M) steuert und durch eine elektronische Steuervorrichtung für die Betätigung der Einspurvorrichtung elektrisch gespeist werden kann.
